# EUROPEAN PATENT SPECIFICATION

(11) **EP 1 155 984 B1**
(45) Date of publication and mention of the grant of the patent: **15.09.2004**
(21) Application number: 01109893.6
(22) Date of filing: 24.04.2001
(51) Int. Cl.: B65G 61/00, B65G 47/90, B65H 31/30, B65G 57/03

(54) **Gripping header for handling piles of loose signatures, sheets, advertising brochures and other similar products**
Greifkopf zum Handhaben von Stapeln von Druckbogen, Werbebroschüren oder anderen ähnlichen Produkten
Tête de préhension pour la manutention des feuilles imprimées, des brochures publicitaires ou des autres produits similaires

(30) Priority: 18.05.2000 IT VI000098
(43) Date of publication of application: 21.11.2001
(73) Proprietor: Mariani s.a.s. di Mariani Federico & C., 36010 Carre' (Vincenza) (IT)
(72) Inventor: Mariani, Paolo, 36016 Thiene (Vicenza) (IT); Dal Zotto, Giovanni, 36016 Thiene (Vicenza) (IT)
(74) Representative: Bettello, Pietro, Dott. Ing.

(56) References cited:
- DE-A- 3 024 133
- JP-A- 58 130 824
- US-A- 4 383 788

## Description

The present invention relates to a gripping header for handling piles of loose signatures.

As it is well known, in graphic industry the palletisation of printed products such as books, magazines, sheets and other, is currently performed in a totally automated way through machines that provide to withdraw the product laid on a conveyor belt and to their successive laying on pallets, to be stocked in a store.

According to the features of the product to be palletised, such as piles of different size and weight, consisting of strapped or simply piled products, the automatic machine varies its configuration, ranging from complex mechanisms, such as that described in patent EP 1 024 098 A, filed by the same Applicant or as described in patent DE 3 024 133, to simple robots provided with gripping comb.

Purpose of the present finding is the realisation of a palletising mechanism, particularly adapted for handling loose signatures, sheets for brochures, leaflets, advertising folders and other similar products arranged on non-stripped piles.

This is obtained by providing gripping header according to claim 1 that, applied to the arm of a robot, withdraws piles of loose signatures from a conveyor belt and lays them in an ordered manner onto a pallet. The dependent claims define preferred embodiments. PLC means programmable logic controller.

The features of the header of the finding are highlighted with the description of a possible embodiment, illustrated by way of a non-limiting example with reference to the attached drawings. In such drawings:
- Figure 1 (Table I) shows an overall view of the palletising plant provided with the header of the finding;
- Figures 2-4 (Table II) show, in a sequence, the withdrawing steps of the pile from the conveyor belt;
- Figures 5-7 (Table III) show, in a sequence, the laying steps of the pile onto the pallet.

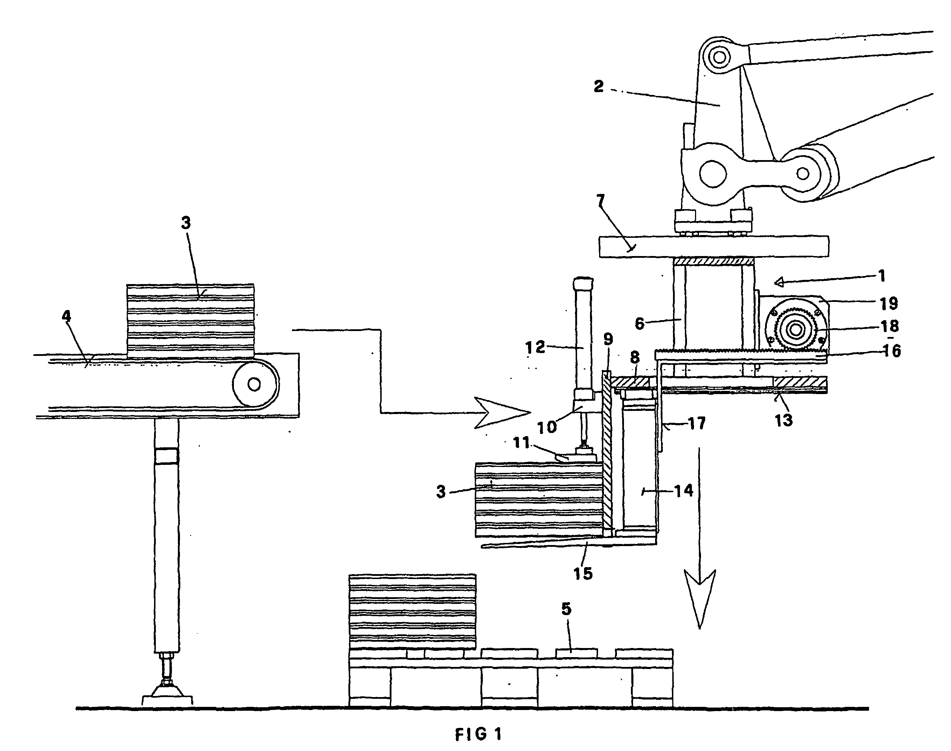

As it can be seen in figure 1, header 1 is applied to arm 2 of a robot which, through anthropomorphous motions (reference shall be made to the arrows) allows the above header to grip pile 3, arranged on conveyor belt 4 and, always through anthropomorphous motions (reference shall be made to the arrows), to lay it onto pallet 5, according to an order set on the PLC that controls the motion of the same robot.

Constructively, header 1 consists of a frame 6, anchored to flange 7 of the robot arm 2, which supports the horizontal plate 8 on which there is frontally applied the vertical abutment plate 9 of pile 3.

On plate 8 there is also fastened support 10 of presser 11, commanded by the pneumatic cylinder 12, which provides to keep the loose signatures compressed during the movement of pile 3.

On the lower side of the horizontal plate 8 there are applied prismatic guides 13, on which upright 14, provided with comb 15 carrying pile 3, slides.

The alternate rectilinear sliding of upright 14 on guides 13 for allowing the action of insertion/extraction of comb 14 under pile 3, is realised through a rack 16, which is integral to the same upright through bracket 17, which is alternately moved by pinion 18, actuated by motor 19, applied on frame 6.

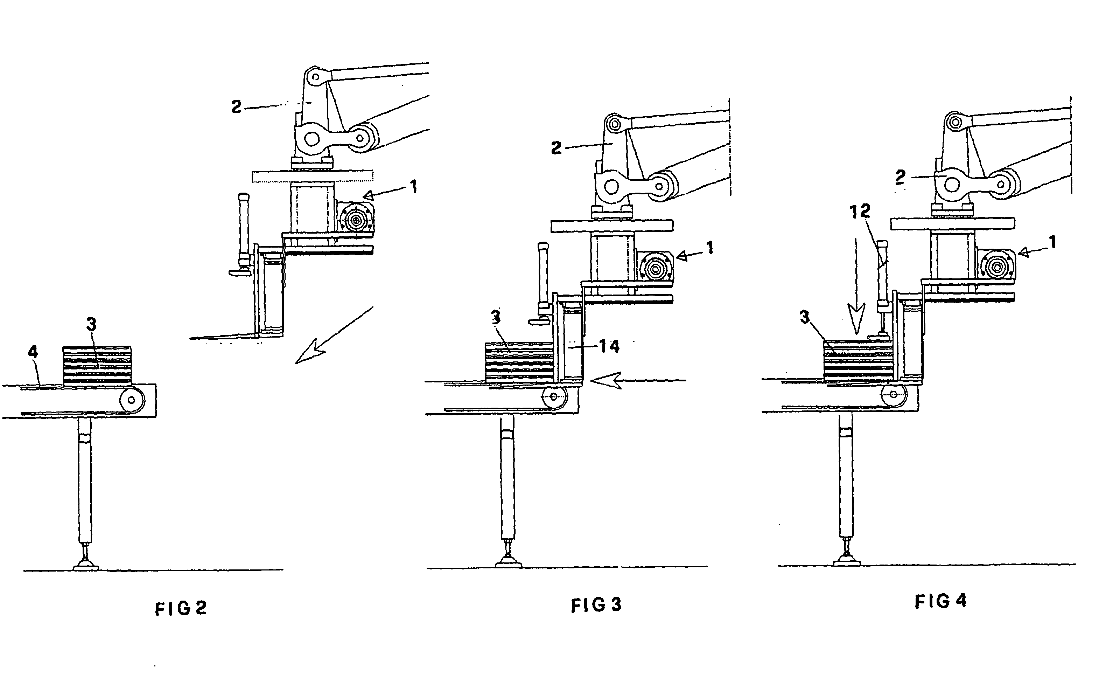

Operatively, as it can be seen in figures 2-4, the gripping of pile 3 is realised first through an approaching action of header 1; afterwards, comb 15 inserts with its teeth under the above pile 3, arranged on the conveyor belt 4 and after that, press 11 is lowered to compress the loose signatures and keep them locked on the above comb.

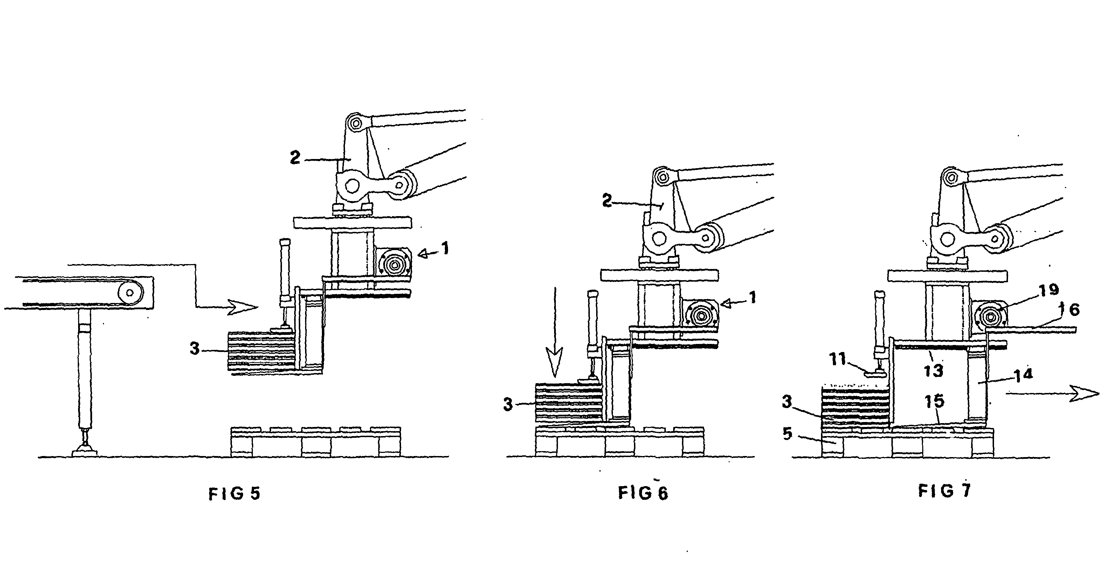

Operatively, as it can be seen in figures 5-7, the laying of pile 3 onto pallet 5 is realised first through an approaching action of header 1; afterwards, comb 15 abuts onto pallet 5 and after that, with the sliding of upright 14, the comb withdraws from pile 3, which thus abuts onto the pallet and finally, press 11 is lifted, thus allowing the header to restore to its starting position for a new grip.

A further feature of the finding consists in the possibility of automatically adjusting the gripping position of the comb so as to adapt it to the different lengths of the signature piles, which is simply realised by adjusting the stroke of upright 14; in fact, the more upright 14 stops in the proximity of the abutment plate 9, the more the comb teeth protrude from the above plate.

Finally, the finding provides for comb 15 to be removable from upright 14 so as to be replaced in function of the width of the pile to be handled.

Of course, different embodiments are possible, in particular consequent to the use of different handling members, without departing from the scope of the following claims.

## Claims

1. GRIPPING HEADER, for handling piles of loose signatures, sheets, advertising brochures and other similar products, which is applied to the arm (2) of a robot which, through anthropomorphous motions, allows the above header to first grip the pile (3), arranged on a conveyor belt (4) and afterwards, always through anthropomorphous motions, to lay it on the pallet (5), according to an order set on the PLC that controls the motion of the same robot, said gripping header (1)
**characterised in that**
it comprises a frame (6), anchored to the flange (7) of the robot arm 2, which supports a horizontal plate (8) on which there is frontally applied a vertical abutment plate (9) of the pile (3), on said vertical plate (9) there being fastened the support (10) of the presser (11) commanded by the pneumatic cylinder (12), which provides to keep the loose signatures compressed during the movement of the same pile.

2. GRIPPING HEADER according to claim 1, **characterised in that** a comb (15) carrying the pile (3) is supported by an upright (14) adapted to alternately slide on prismatic guides (13) applied on the fixed horizontal plate (8).

3. GRIPPING HEADER, according to claim 2, **characterised in that** the alternate rectilinear movement of the upright (14) for allowing the action of insertion/extraction of the comb (14) under the pile (3) is realised through a rack (16) which is integral to the same upright through a bracket (17), which is alternately moved by the pinion (18), actuated by the motor (19), applied on the fixed frame (6).

4. GRIPPING HEADER, according to claim 2, **characterised in that** it can be provided with the automatic adjustment of the gripping position of the comb, so as to adapt it to the different lengths of the signature piles, by simply adjusting the stroke of the upright (14), there being provided that the more said upright stops in the proximity of the abutment plate (9), the more the comb teeth protrude from the above plate.

5. GRIPPING HEADER according to one or more of the previous claims, **characterised in that** the comb (15) is removably connected to the upright (14) so as to be replaced according to the width of the pile (3).

## Patentansprüche

1. Greifkopf zum Handhaben von Stapeln von Druckbogen, Werbebroschüren oder anderen ähnlichen Produkten, welcher angebracht ist am Arm (2) eines Roboters, in welcher es durch anthropomorphe Bewegungen ermöglicht, dass der Kopf zuerst den Stapel (3), auf einem Förderband (4) angeordnet, ergreift und danach, immer mittels anthropomorpher Bewegungen, diesen auf die Palette (5) zu legen, entsprechend einem Befehlssatz in der SPS, die die Bewegungen desselben Roboters steuert, wobei der Greifkopf (1)
**dadurch gekennzeichnet ist, dass**
er ein Gerüst (6) umfasst, welches am Flansch (7) des Roboterarms 2 verankert ist, welches eine horizontale Platte (8) trägt, auf welcher frontal eine vertikale Widerlagerplatte (9) des Stapel s (3) angeordnet ist, wobei an der vertikalen Platte (9) die Halterung (10) des von dem pneumatischen Zylinder (12) gesteuerten Pressers (11) befestigt ist,, der dafür sorgte, dass die losen Bögen während der Bewegung des nämlichen Stapels komprimiert bleiben.

2. Greifkopf nach Anspruch 1, **dadurch gekennzeichnet, dass** ein den Stapel (3) tragender Kamm (15) von einem Ständer (14) gehalten wird, der so ausgebildet ist, dass er alternierend auf prismenförmigen Führungen (13) gleitet, die an einer ortsfesten horizontalen Platte (8) angebracht sind.

3. Greifkopf nach Anspruch 2, **dadurch gekennzeichnet, dass** die alternierende geradlinige Bewegung des Ständers (14) zum ermöglichen der Aktion des Einführens/Herausziehens des Kamms (14) unter den/dem Stapel (3) durch ein Gestell (16) realisiert wird, welches mit dem nämlichen Ständer fest verbunden ist, und zwar durch einen Bügel (17), welcher alternierend bewegt wird durch das von dem Motor (19) betätigte Ritzel (18), dass an dem ortsfesten Gerüst (6) angebracht ist.

4. Greifkopf nach Anspruch 2, **dadurch gekennzeichnet, dass** er mit der automatischen Einstellung der Greifposition des Kamms versehen werden kann, derart, dass dieser auf die unterschiedlichen in längeren der Stapel von Bögen angepasst wird, indem einfach der Hub des Ständers (14) eingestellt wird, wobei vorgesehen ist, dass die Kamm Zähne desto mehr über die Widerlagerplatte (9) hinaus ragen, je mehr der Ständer in der Nähe der Platte anhält.

5. Greifkopf nach einem oder mehreren der vorstehenden Ansprüche, **dadurch gekennzeichnet, dass** der Kamm (15) abnehmbar mit dem Ständer (14) verbunden ist, um entsprechend der Breite des Stapels (3) ausgetauscht zu werden.

## Revendications

1. Tête de saisie, pour la manipulation de piles de cahiers séparés, de feuilles, de brochures publicitaires et autres produits similaires, qui est appliquée sur le bras (2) d'un robot qui, par l'intermédiaire de mouvements anthropomorphes, permet à la tête ci-dessus de tout d'abord saisir la pile (3), agencée sur une bande de transporteur (4) et, après ceci, toujours par l'intermédiaire de mouvements anthropomorphes, de la disposer sur la palette (5), conformément à un ordre défini sur la commande logique programmable (PLC) qui commande le déplacement de ce robot, ladite tête de saisie (1)
étant **caractérisée en ce qu'**elle
comporte un châssis (6), ancré sur le rebord (7) du bras de robot (2), qui supporte une plaque horizontale (8) sur laquelle est appliquée frontalement une plaque de mise en butée verticale (9) de la pile (3), sur ladite plaque verticale (9) étant fixé le support (10) du poussoir (11) commandé par le vérin pneumatique (12), qui permet de maintenir les cahiers séparés comprimés pendant le déplacement de cette même pile.

2. Tête de saisie selon la revendication 1, **caractérisée en ce qu'**un peigne (15) supportant la pile (3) est supporté par un montant vertical (14) adapté pour alternativement coulisser sur des guides prismatiques (13) appliqués sur la plaque horizontale fixe (8).

3. Tête de saisie selon la revendication 2, **caractérisé en ce que** le mouvement rectiligne alterné du montant vertical (14) destiné à permettre l'action d'insertion/extraction du peigne (14) sous la pile (3) est réalisé par l'intermédiaire d'une crémaillère (16) qui est en un seul tenant avec ce même montant vertical par l'intermédiaire d'une cornière (17), qui est déplacée de manière alternée par le pignon (18), actionné par le moteur (19), appliqué sur le châssis fixe (6).

4. Tête de saisie selon la revendication 2, **caractérisée en ce qu'**elle peut assurer l'ajustement automatique de la position de saisie du peigne, de manière à l'adapter aux différentes longueurs de la pile de cahiers, en ajustant simplement la course du montant vertical (14), en étant prévu que plus ledit montant vertical s'arrête à proximité de la plaque de butée (9), plus les dents du peigne font saillie à partir de la plaque située au-dessus.

5. Tête de saisie selon l'une quelconque des revendications précédentes, **caractérisée en ce que** le peigne (15) est relié de manière amovible au montant vertical (14) de manière à être replacé conformément à la largeur de la pile.
